# EUROPEAN PATENT SPECIFICATION

(11) **EP 0 319 332 B1**
(45) Date of publication and mention of the grant of the patent: **30.03.1994**
(21) Application number: 88311470.4
(22) Date of filing: 02.12.1988
(51) Int. Cl.: H01S 3/16

(54) **Chromium-doped forsterite laser system**
Chrom-dotiertes Forsterit-Lasersystem
Système laser à forstérite dopée au chrome

(30) Priority: 04.12.1987 US 128811
(43) Date of publication of application: 07.06.1989
(73) Proprietor: Alfano, Robert R., Bronx, New York 10463 (US); Petricevic, Vladimir, New York New York 10027 (US); Gayen, Swapan K., Bronx New York 10462 (US)
(72) Inventor: Alfano, Robert R., Bronx, New York 10463 (US); Petricevic, Vladimir, New York New York 10027 (US); Gayen, Swapan K., Bronx New York 10462 (US)
(74) Representative: Marlow, Nicholas Simon

(56) References cited:
- PATENT ABSTRACTS OF JAPAN, vol. 11, no. 88 (E-490)[2535], 18th March 1987; & JP-A-61 240 692
- PATENT ABSTRACTS OF JAPAN, vol. 11, no. 249 (E-532)[2696], 13th August 1987; & JP-A-62 62 573

## Description

### BACKGROUND OF THE INVENTION

The present invention relates generally to lasers and more particularly to a laser in which the laser medium is a single crystal.

The use of lasers in science and industry has received wide acceptance in an ever increasing variety of applications. Lasers have found use in such diverse areas as range finding apparatus, optical surgery, optical printers, optical readers and metal drilling. Briefly, lasers operate on the principle of light amplification through stimulated emission of radiation and can create extremely intense concentrations of light. The coherent light beam produced in a laser cavity is amplified in a laser material. Materials which have been used as laser hosts include gases, liquids, glasses and single crystalline solids.

When single crystalline solids are utilized in lasers, the crystals are generally in the form of elongated rods. The structure of the crystalline material must be very nearly perfect, since any optical inhomogeneities will cause distortion and scattering of the laser beam and thereby reduce the intensity and coherence of the radiation. Imperfections in the crystal which adversely affect lasing performance include elastic strain, crystal misorientations, chemical concentration inhomogeneities, dislocations, inclusions and bubbles.

In U.S. Pat. No. 3,997,853 to R.C. Morris et. al there is disclosed a laser in which the host comprises a single crystal of beryllium aluminate (BeAl204) doped with trivalent chromium ions, the single crystal being crystallographically oriented substantially along the a-c plane, at least 30 degrees removed from the b-axis, and having a chromium doping concentration ranging from about 0.005 to 1.0 atom percent.

In U.S. Pat. No. 4,272,733 to J.C. Walling etc., there is disclosed a high power, broadly wavelength-tunable laser system which comprises as the laser medium particular single crystals of chromium-doped beryllium aluminate (BeAl204:Cr3+) having the chrysoberyl structure, means for exciting the laser medium and tuning means. The laser may be operated over a broad temperature range from cryogenic temperatures to elevated temperatures. Elevated temperatures are preferred, however, since they result in higher laser gain. Emission is in a spectral range from red to infrared, and the laser is useful in the fields of defense. communications, isotope separation, photochemistry, etc.

In U.S. Pat. No. 4,019,156 to W.D. Fountain there is disclosed a Q-switched/mode-locked Nd:YAG laser oscillator employing simultaneous active (electro-optic) and passive (saturable absorber) loss modulation within the optical cavity is described. This "dual modulation" oscillator can produce transform-limited pulses of duration ranging from about 30 psec to about 5 nsec with greatly improved stability compared to other mode locked systems. The pulses produced by this system lack intrapulse frequency or amplitude modulation, and hence are idealy suited for amplification to high energies and for other applications where well-defined pulses are required. Also, the pulses of this system have excellent interpulse characteristics, wherein the optical noise between the individual pulses of the pulse train has a power level well below the power of the peak pulse of the train.

In U.S. Pat. No. 4,464,761 to R.R Alfano, et. al. a laser system in which the laser medium is a single crystal of Be₃A₂(SiO₃)₆:Cr³⁺ (Emerald) is disclosed. Because of its wide fluorescent bandwidth, the material is suitable for high intensity. tunable, mode-locked pulses with durations as short as 10-500 femtoseconds. A number of different laser systems containing this laser medium are described.

In an article entitled Color by Kurt Nassau appearing in Scientific American, October 1980, Volume 243, Number 4. pp. 124-156, various properties of Ruby, alexandrite and Emerald are discussed.

A laser medium comprising a crystal of forsterite doped with trivalent chromium ion and emitting in the range of about 850-950 nm is known from PATENT ABSTRACTS OF JAPAN, vol. 11, no. 88 (E-490)[2535], 18th March 1987; & JP-A-61 240 692 (MITSUI MINING & SMELTING CO., LTD) 25-10-1986.

### SUMMARY OF THE INVENTION

It is an object of this invention to provide a new and improved laser.

It is another object of this invention to provide a new and improved laser material.

It is still another object of this invention to provide a new and improved chromium doped laser material.

It is yet still another object of this invention to provide a new and improved solid state laser which can be broadly tuned and which can produce short pulses having durations in the picosecond and femtosecond range.

According to the teachings of the present invention there is provided a laser which comprises a laser medium comprising a single crystal of forsterite doped with trivalent chromium ions (Cr³⁺:Mg₂SiO₄), optical means for exciting said laser medium to emit coherent radiation and an optical resonant cavity for supporting coherent radiation emitted by the laser medium over a band between 1150 and 1350 nm.

A laser according to the present invention and comprising a folded astigmatism corrected cavity is defined in claim 24. Embodiments are set out in the dependent claims.

According to one feature of the invention the laser may include tuning means within the optical resonant cavity for tuning the laser over a range of frequencies and according to another feature of the invention the laser may include mode locking means for producing mode locking operation. The laser material may be made either in a rod type of a disc type configuration. The chromium doping is in the range of about 0.01 to 0.5 atom percent.

A number of different laser system configurations employing the novel laser material are disclosed.

For a better understanding of the present invention, together with other aid further objects thereof, reference is made to the following description taken in conjunction with the accompanying drawings and its scope will be pointed out in the appended claims.

### BRIEF DESCRIPTION OF THE DRAWINGS

In the drawings wherein like reference characters represent like

parts:
Figs. 1(a) and 1(b) are graphs of the room temperature absorption and fluorescence spectra, respectively of Cr³⁺:MgSiO₄;
Fig. 2 is a schematic illustration of an experimental system used in investigating laser action in Cr³⁺:Mg₂SiO₄;
Fig. 3 is a graph of the temporal profile of a Cr³⁺:MgSiO₄ laser pulse;
Fig. 4 is a graph of the slope effeciency for the cavity shown in Fig. 2;
Fig. 5 is a graph of the output spectrum for the laser system shown in Fig. 2.
Fig. 6 is a schematic illustration of a tunable laser system constructed according to the present invention;
Fig. 7 is a schematic illustration of another laser system constructed according to the present invention;
Fig. 8 is a schematic illustration of another laser system constructed according to the present invention;
Fig. 9 is a schematic illustration of another laser system constructed according to the present invention;
Fig. 10 is a schematic illustration of another laser system constructed according to the present invention; and
Fig. 11 is a schematic illustration of another laser system constructed according to the present invention.

### DETAILED DESCRIPTION OF PREFERRED EMBODIMENTS

The present invention is based on the discovery that chromium ion doped forsterite, i.e. chromium ion doped magnesium orthosilicate might work as a laser medium for a tunable solid state laser and more specifically that chromium doped forsterite lases.

In experimention conducted, the emission spectra of a chromium doped forsterite laser system were taken with a 500 nm blazed-grating spectrometer and a s-1 photomultiplier tube having sensitivity up to 1000 nm and with a cavity designed to obtain laser operation in the 700-1000 nm spectral region revealed no laser action because of residual absorption due to impurity ions in the crystal used that extends from 850 to 1150 nm.

However, when fluorescence spectra were subsequently taken with a spectrometer equipped with a 1000 nm blazed grating and a germanium-photodiode combination and scanning the spectral range 70-1350 nm. showed laser action in the 1150-1350 nm spectral range. Using ordered high-reflectivity mirrors for the spectral range 1150-1350 nm, and high transmission at 532-nm for a pump laser, a stable cavity was designed with those mirrors, and pulsed laser action was readily obtained with longitudinal pumping of the crystal using the 532-nm, 10 ns pulses from a Q-switched Nd: YAG laser.

Prompted by the successful broadly wavelength-tunable, room-temperature operation of alexandrite and emerald lasers, the surge in research activities on tunable solid state lasers has been extensive in the eighties. The thrust of these research endeavors has been two fold: first to look for new host materials for the trivalent chromiumion, and second, to search for new ions that will lase in commonly used host crystals. These efforts have been rewarded by the successful wavelength-tunable laser operation of Cr³⁺ in a number of hosts, by the discovery of new lasing ions trivalent titanium (Ti3+) and divalent rhodium (Rh2+) as well as by the "rediscovery" of tunable phonon-terminated lasers based on divalent transition metal ions Ni²⁺Co²⁺ and V²⁺ The present invention is directed to the first room-temperature vibronic, pulsed laser operation of Cr³⁺ in forsterite (Mg₂SiO₄).

Forsterite, like alexandrite, is a member of the olivine family of crystals. It is a naturally occuring gem. Single crystals of forsterite may be grown by the Czochralski method. A unit cell of forsterite has four formula units in an orthorhombie structure of the space group Pbnm. The unit cell dimensions are: a=4.76Å, b= 10.22Å, and C=4.99Å. The Cr³⁺ ion substitutes for the Mg²⁺ ion in two distinct octapedrally co-ordinated sites: one (M1) with inversion sysnmetry (Ci), and the other (M2) with mirror symmetry (Cs). The occupation ratio of the two sites by the Cr³⁺ ion is M1: M2 = 3:2.

A single crystal of Cr³⁺:Mg₂SiO₄ used for spectroscopic and laser action measurements was grown by the Czochralski method. The crystal was a 9 mm x 9mm x 4.5 mm rectangular parallelipiped with the three mutually orthogonal axes oriented along the a, b and c crystallagraphic axes of the crystal. The crystal contained 0.04 at 1% of Cr³⁺ ions, which is equivalent to a chromium ion concentration of 6.9 x 1018 ions/cm3.

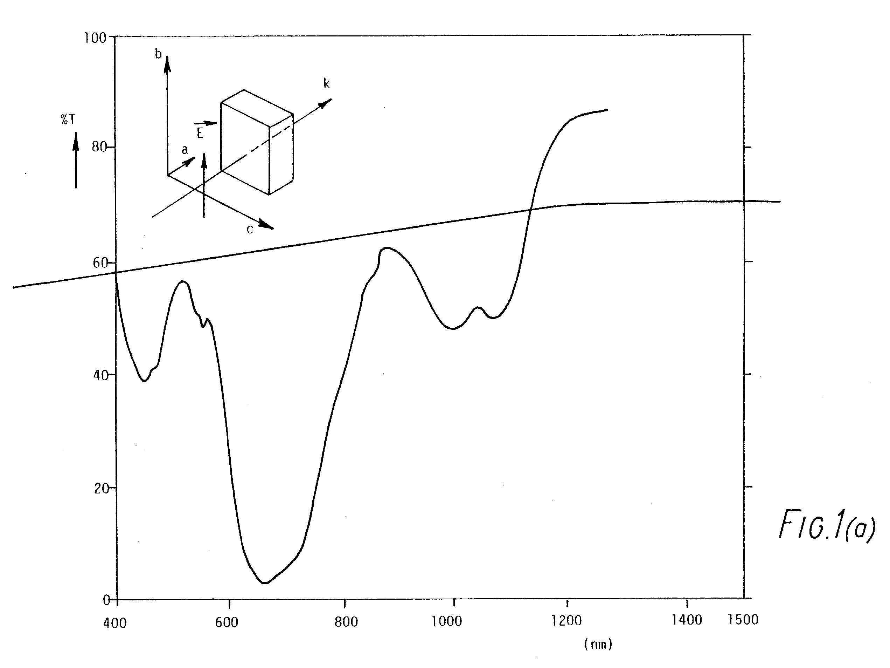

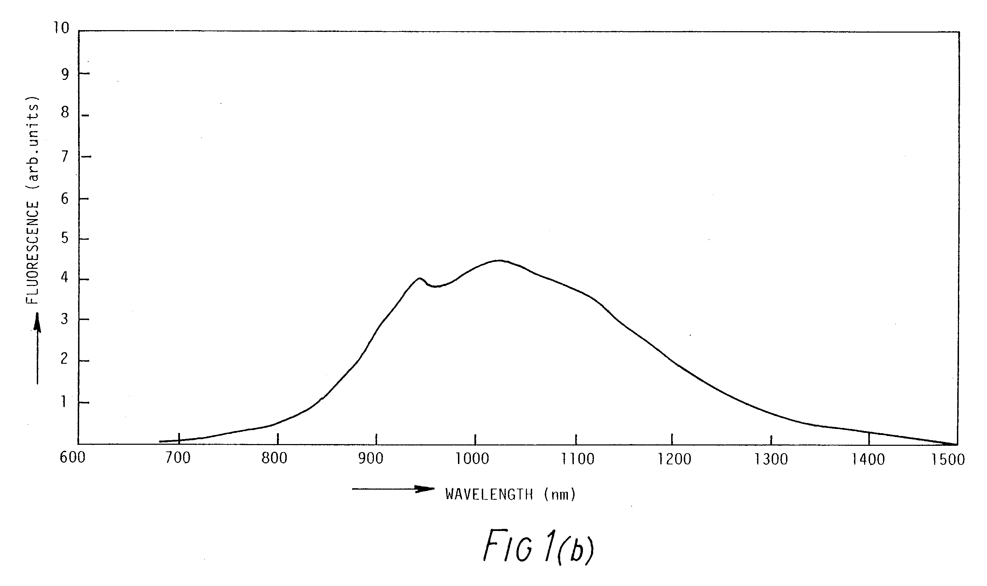

The room-temperature absorption and fluorescence spectra of Cr³⁺:Mg₂SiO₄ for E11b crystallographic axis are shown in Figs. 1(a) and 1(b). The absorption spectrum was taken with a Perkin-Elmer Lambda-I spectrophotometer along the 4.5 mm path length of the sample: It is characterized by two broad bands centered at -40 nanometers (nm) and 460 nm attributed to the 4A2 → 4T2 and 4A2 → 4T1. absorptive transitions, respectively, of the Cr3+ ion. The shape and strength of the absorption spectra do not change significantly at liquid nitrogen temperature, except for the appearence of a sharp line at 702 nm and three lines between 540-575 nm. The line at 702 nm shows up as a prominent feature in the fluoresence spectra. This latter feature is attributed to the 4A2 → 2E transition of the Cr3+. The weak sharp lines between 540-575 nm are assigned to spin-forbidden 4A2 → 2T2 transitions. The broad, weak absorption band between 850 -1150 nm is not observed in the excitation spectrum. This indicates that the origin of this absorption is not transitions in Cr³⁺ ion, but in some other impurity ions, e.g., in the host crystal. It is evident from Fig. 1 that this background absorption overlaps a significant spectral region of emission, and inhibits laser action in that region.

The fluorescence spectrum of Cr³⁺:Mg₂SiO₄ was excited by the 488-nm radiation from an argon-ion laser and recorded by a germanium photodiode detector-locking amplifier combination at the end of 0.25 -m monochromator (SPEX minimate) equipped with a 1000-nm blazed grating. The room temperature spectrum is a broadband covering the wavelength range 700-1300 nm. At liquid nitrogen temperature, the spectrum shows the sharp 2E → 4T2 zero-phonon line, followed by an elaborately structured sideband extending up to 750 nm, and a broadband peaked at 980 nm. The broadband is due to transitions from the 4T2 state to the vibrational levels of the 4A₂ ground state, and almost the entire fluorescence is channeled into this band. The room temperature fluorescence lifetime is 15 us.

Both the absorption and emission spectra of Cr³⁺:Mg₂SiO₄ system depend strongly on the polarization of the incident light and the orientation of the crystallographic axes in the sample. This polarization dependence may be explained in terms of the reduction in Cr³⁺ site symmetry from Om → D₂ and associated polarization selection rules.

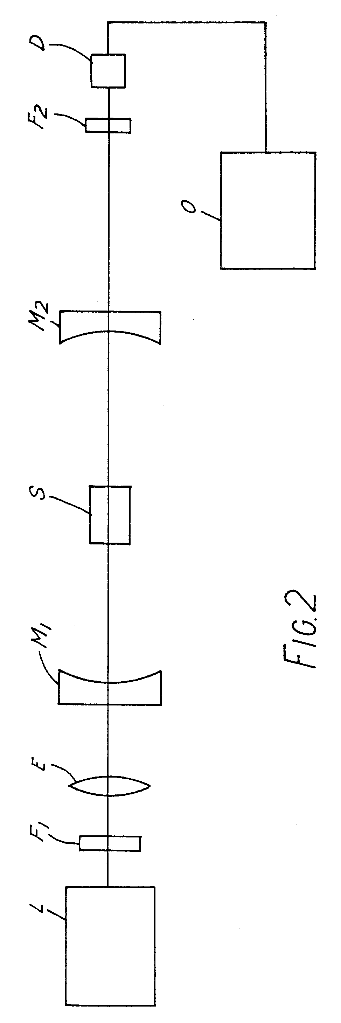

The experimental arrangement for investigating the laser action in Cr³⁺:Mg₂SiO₄ is shown schematically in Fig. 2. The chromium ion doped forsterite sample S is placed at the center of a stable resonator formed by two 30 cm radius mirrors M₁ and M₂ placed 20 cm apart. Mirrors M₁ and M₂ were dielectric coated to transmit the 532-nm pump beam, and to have high reflectivity in the 1150-1350 nm spectral range. The reflectivity of the back mirror M1 is 99.9%, while that of the output mirror M2 is 98% for normal incidence over the specified wavelength range. It is to be noted that this spectral region does not correspond to the peak of the fluorescence spectrum, but was chosen so that the background absorption is minimal. The sample S was longitudinally pumped by frequency -doubled 532 nm. 10-ns FWHM pulses from a Q-switches Nd:YAG laser (Quanda Ray DCR-1) L operating at a 10 HZ repetition rate. The spatial profile of the pump pulse was a doughnut, characteristic of an unstable cavity. The pump beam which was linearly polarized along the crystallographic axis of the sample S was filtered by a filter F₁ and then focussed 3 cm before the sample S by a 25 cm focal length lens E. The radius of the pump beam at the center of the sample S is -600um. The output for the laser cavity was filtered by a filter F₂ and monitored by a germanium photodiode detector D. The output of detector D was displayed on a fast oscilloscope O. No dispersive element was placed in the cavity and the laser operated in a free running mode.

Pulsed laser operation has also been obtained for pumping at or above the lasing threshold of 2.2 MJ. A single output laser pulse was obtained, implying a gain-switched operation which is a consequence of pump-pulse duration being shorter than the lasing-level lifetime. The amplitude and duration of the laser pulse varied as expected with the pulse-to-pulse energy fluctuation of the pump laser. The output was extremely sensitive even to a small misallignment of the cavity, or insertion of a glass plate (8% loss) in the cavity.

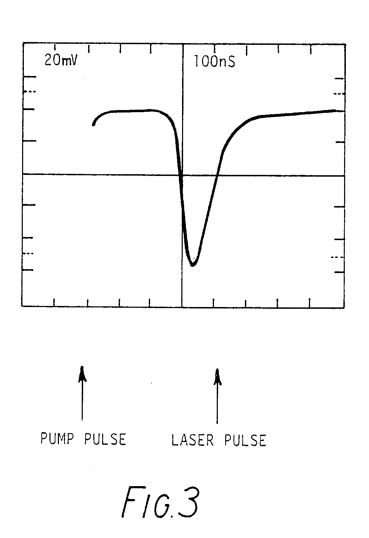

The temporal profile of the Cr³⁺:Mg₂SiO₄ laser pulse is shown in Fig. 3. The temporal duration (FWHM) of the output laser pulse varied from 200 ns at the threshold at 100 ns at 2.4 times the threshold energy.

The delay between the peak of the pump pulse and the peak of the Cr3+:Mg2SiO4 laser pulse also varied, as expected, with pump-pulse energy, from 700 ns at the threshold to 200 ns at 2.4 times the threshold energy. This indicates that the laser cavity is highly lossy, and several hundred round trips are required to build up the laser oscillation in the cavity.

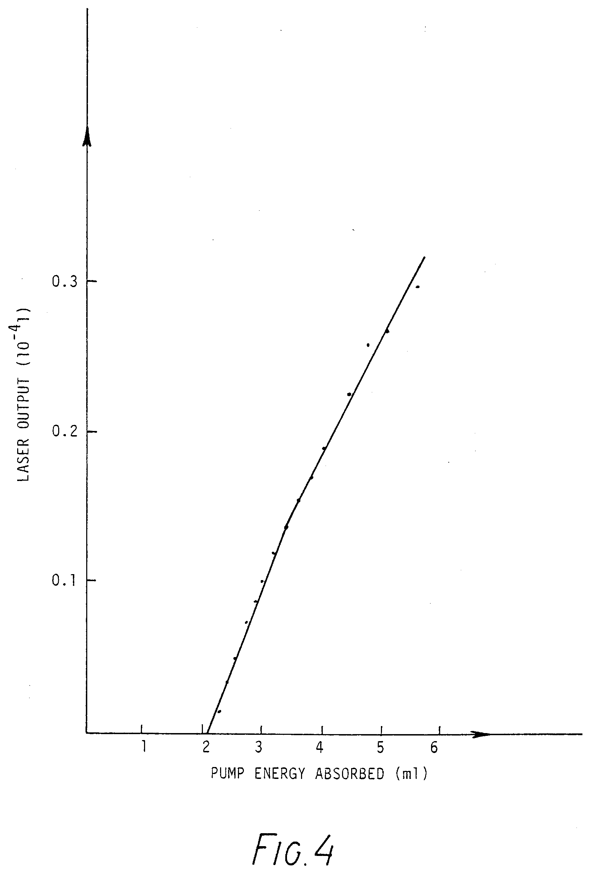

The laser slope efficiency was measured for the cavity used in the above noted experiment and the data is displayed in Fig. 4. The laser oscillation starts to build up at an absorbed input energy of 2.2 mj. The measured slope efficiency of 1% is rather low, and indicates large losses in the cavity. These losses include 13% reflection loss from the uncoated sample surfaces, scattering from inhomogenetics in the crystal, and a large mismatch between the size, of the pump beam and the Cr³⁺:Mg₂SiO₄ cavity modes in the sample.

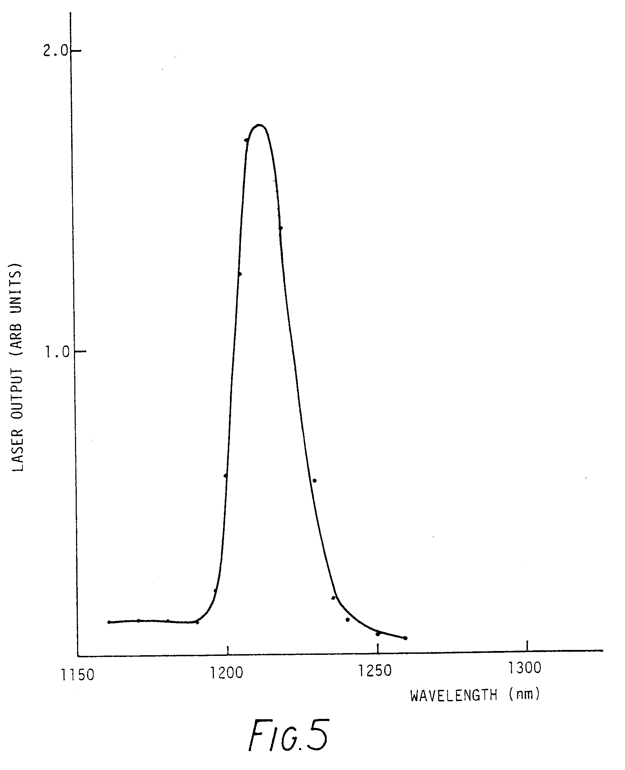

The spectrum of Cr³⁺:Mg₂SiO₄ laser is shown in Fig. 5, for an absorbed pump energy of 3.6 mj. The spectrum peaks at 1216 nm and has a FWHM of 21 nm. The bandwidth of the laser output varies with absorbed pump energy. However, the spectral range is limited on the high energy end by the mirror transmission and the impurity absorption, while the low energy end by the mirror transmission as well as by the decrease in fluorescence intensity. Laser action has been observed in a narrow spectral range at the low-energy end, of Cr³⁺:Mg₂SiO₄ fluorescence band. Improvements in crystal growth technique may eliminate the impurity absorption that inhibits laser action in most, of fluorescence band. With better crystals we expect a tuning range of 800-1250 nm for the Cr³⁺:Mg₂SiO₄ laser can be expected.

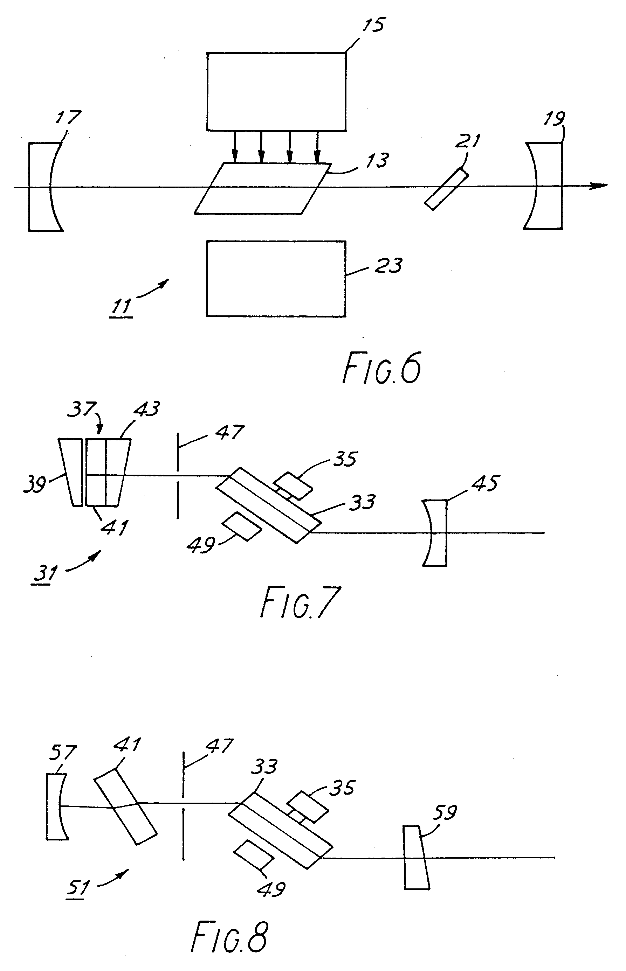

Referring now to Fig. 6, there is illustrated an example of a laser system constructed according to the teachings of the present invention and identified generally by reference numeral 11. Laser system 11 includes a laser medium 13, an optical pumping source 15, an optical resonant cavity made up of a 99.9% (i.e. fully) reflective curved end mirror 17 and a 50 to 99% reflective (partly transmissive) curved end mirror 19, a tuning element 21 located between laser medium 13 and end mirror 19 and a cooling system 23 for regulating the temperature of the laser rod 13, the cooling system 23 being illustrated for simplicity in block diagram form. Laser medium 13 consists of a single crystal of chromium doped forsterite Cr³⁺:Mg₂SiO₄ with the chromium doping being in the range of about 0.01 to 0.5 atom percent. The crystal is constructed in the form of an elongated rod which is made longitudinal about the c-axis of the crystal. The ends of rod 13 may be cut at a Brewster angle, flat or 6 degree angle and may be coated with a suitable dielectric antireflection coating. Typical dimensions for rod 13 may be 1 cm. by 4 cm. The crystal may be conventionally grown by the Czochralski process pumping source 15 may be any suitable optical pumping source, either incoherent or coherent, continuous wave or pulsed, that will excite the laser medium 13. If a coherent pumping source is used it must have an emission wavelength that is absorbed by the ground state of the Cr + dopant but not absorbed excessively by the excited site. For example, pumping source 15 may be a xenon lamp or an argon or a diode laser. If pumping source 15 is a laser it may either be positioned about the laser medium (as shown) or along the axis of the cavity outside of one of the end mirrors. End mirror 17 contains a coating designed for maximum reflectivity over a band width between around 1150-1350 nanometers A. End mirror 19 is curved and contains a similar coating designed for maximum reflectivity over the same bandwidth as end mirror 17. The 1150-1350 nm A bandwidth covers the range of frequencies over which coherent light is produced.

If pumping source 15 is a laser and positioned outside the cavity along the axis of the cavity, the end mirror through which the pumping light passes into the cavity is designed for maximum transmissivity at the pumping laser emission frequency i.e. 532 nm if it is a NS:YAG laser. End mirrors 17 and 19 are spaced apart from one another the proper distance to form an optically resonant cavity and rod 13 is located along the focal point of the end mirrors. End mirrors 17 and 19 may have a curvature of around 30 centimeters. The output radiation, of laser system 11 shown by arrow 25 emanates from end mirror 19. If desired, both mirrors may be made partially reflecting. Cooling system 23 includes a fluid (not shown) which may be air, water or a cryogenic liquid, contained in a tank in communication with a laser mounting head (not shown) through pipes. Tuning element 21 may be in the form of a prism or a cell or jetstream containing a saturable due absorber such as DD1. Laser 11 operates in a conventional manner (as any solid state laser) and emits radiation over frequency band centered at 1215 nm with a bandwidth of 20 nanometers and also at 1235 nm with a bandwidth of 20 nanometer.

Referring now to Fig. 7, there is illustrated a passive made locked laser system 31 constructed according to the teachings of the present invention and identified generally by reference numeral 31. Laser system 31 includes a laser medium 33, a pumping source 35, an end assembly 37 having an end mirror 39, a dye cell 41 containing a saturable absorber and a window 43, an end mirror 45, an aperture plate 47 and a cooling system 49.

Laser medium 33 is similar to rod 13 with the exceptions being that the ends are cut at Brewster's angle and arranged for polarization along the b-axis and the rod itself aligned along the Brewster's angle rather than being colinear with axis of the cavity. The width of dye cell 41 may be around 100 microns to 2 millimeters. The dye cell 41 contains a saturable dye absorber (i.e. a saturable dye solution) which serves as a passive mode locking mechanism. The dye absorber is preferably a saturable cyananine dye. Examples of saturable cyananine dyes are 11′ diethyl 22′ dicarbocyanine iodide in methanol and 11′ diethyl 24′ carboyanine iodide in methanol, which are commonly referred to as DDI and DCI, respectively. Pumping source 35, end mirror 39, end mirror 45, aperture plate 47 and cooling system 49 are the same as the corresponding elements 15, 17, 19, 21 and 23, respectively, in laser system 11.

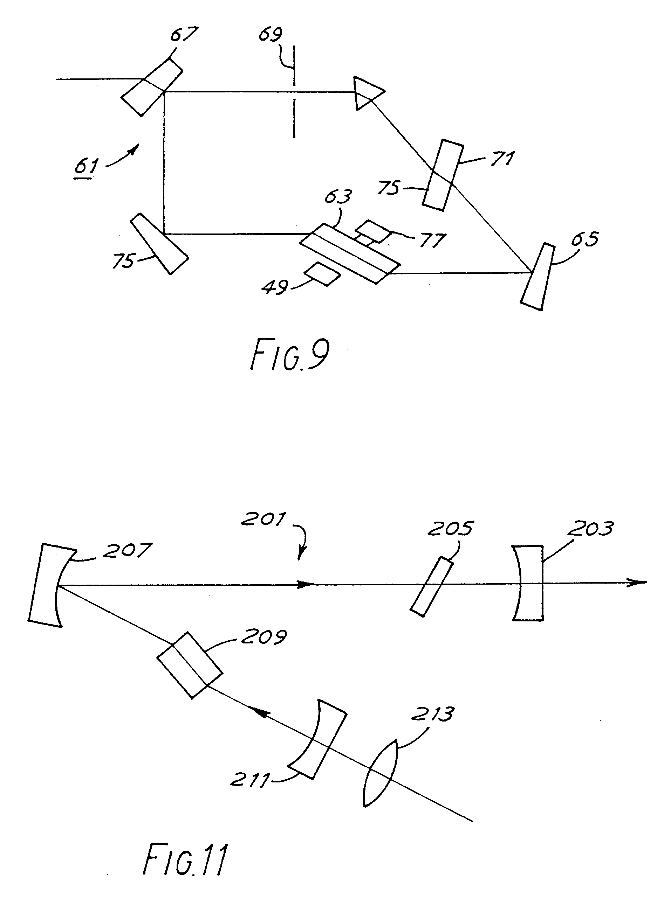

In Fig. 8 there is illustrated another embodiment of a mode locked laser system identified by reference numeral 51. Laser system 51 is similar to laser system 31, the differences being that window 43 is omitted, an acoustic modulation 41 is positioned between end mirror 57 and laser rod 33 is oriented at about Brewsters angle and has thickness of about 1/2 to 1 cm. and diameter about 5 cm., the 99.9% reflecting end mirror 57 is curved with 1 to 10 meter radius of curvature rather than flat and the 50 to 98% output mirror 59 is correspondingly flat and wedge shaped rather than curved. Alternately, mirror 57 may be flat and mirror 59 made to be curved. Alternately, mirror 57 may be made flat and mirror 59 made to be curved.

In Fig. 9 there is illustrated another embodiment of a mode locked laser system 61 of the present invention in which the laser material 63 is located inside a ring type cavity such as used in a Ruby laser and wherein the output beam is tuned.

Laser system 61 includes a laser rod 63 a flat wedge shaped 99.9% reflecting mirror 65, a flat 50 to 98% reflecting wedge shaped mirror 67, an aperature plate 69, tuning means 71 in the form of a prism, a cell or jet stream 73 containing a saturable dye absorber such as DDI and another flat 99.9% reflecting wedge shaped mirror 75 and an optical pumping device 77 in the form of a flash lamp such as xenon. Laser rod 63 is constructed and positioned similar to laser rod 33 in Fig. 5. Mirrors 65 and 75 are similar to 57 in Fig. 8, mirror 69 is similar to mirror 59 in Fig. 6 and aperture plate 69 is similar to aperture plate 47 in Fig. 5.

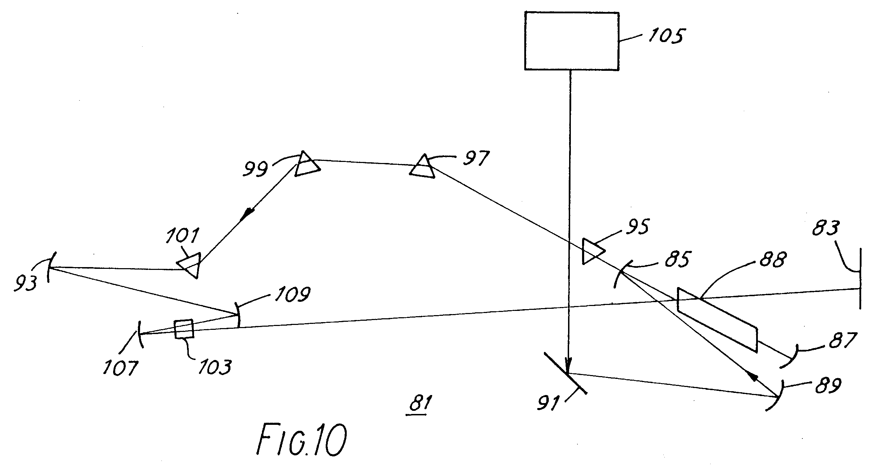

In Fig. 10 there is shown another laser system 81 according to this invention. System 81 includes a first or output mirror 83, a second mirror 85, a third mirror 87, a chromium doped forsterite crystal laser medium 88 a fourth mirror 89, a fifth mirror 91, a sixth mirror 93, four tuning elements 95, 97, 99 and 101, a cell 103 containing a mode locking dye and a pumping laser 105.

In Fig. 11 there is shown an astigmatic corrected cavity system 201 according to this invention. System 2D1 includes a curved output mirror 203, a tuning element 205, a curved collimating mirror 207, a chromium doped forsterite laser rod 209, a curved back mirror 211 and a focusing lens 213.

## Claims

1. A laser comprising:
a. a laser medium comprising a single crystal of forsterite doped with trivalent chromium ions (Cr³⁺:Mg₂SiO₄);
b. optical means for exciting said laser medium to emit coherent optical radiation; and
c. an optical resonant cavity for supporting coherent radiation emitted by the laser medium over a band between 1150 and 1350nm.

2. A laser according to claim 1 in which the chromium ion doping concentration being within the range of about 0.01 and 0.5 atom percent.

3. A laser according to claim 1 or 2 in which the single crystal of the laser medium is crystographically oriented along its b axis.

4. A laser according to any preceding claim including mode locking means for mode locking the laser.

5. A laser according to any preceding claim in which the mode locking means is disposed within the optical resonant cavity.

6. A laser according to claim 4 or 5 in which the mode locking means comprises a saturable absorber.

7. A laser according to claim 6 in which the saturable absorber is a cyanine dye.

8. A laser according to any preceding claim further including a tuner for tuning the coherent radiation emitted by the laser medium.

9. A laser according to claim 8 in which the tuner is a Brewster prism located within the optical resonant cavity.

10. A laser according to any preceding claim in which the laser medium comprises an elongated rod of Cr³⁺:Mg₂SiO₄; the optical resonant cavity comprises a pair of mirrors, one of mirror being designed for 100% reflectivity in the range of about 1150nm to 1350nm and the other mirror being designed for about 50% to 80% reflectivity in the range of about 1150nm to 1350nm; and the exciting means is a flash lamp.

11. The laser of claim 10 in which the ends of the rod are cut at Brewster's angle.

12. A laser according to claim 10 or 11 in which the optical resonant cavity comprises a plurality of mirrors arranged in a ringed type of configuration with etalon for tuning.

13. A laser according to any of claims 1 to 9 in which the laser medium is in the form of a thin disc or platelet the optical resonant cavity comprises a plurality of mirrors arranged in a ringed configuration the exciting means is a pumping laser and the laser includes within the cavity mode locking means and tuning means the disc being cut at Brewster's angle.

14. A laser according to any preceding claim further including an aperture plate located within the optical resonant cavity.

15. A laser according to any preceding claim further including an acousto-optic modulator or saturable absorber for Q-switched operation to produce high power nanosecond pulses.

16. A laser according to any preceding claim in which the means for exciting the medium is a pulsed Nd:YAG laser, a pulsed nitrogen laser, a dye laser, a CW argon-ion laser, a Krypton-ion laser or a flash lamp.

17. A laser according to any preceding claim in which the cavity fits the stability diagram with a Cr³⁺:Mg₂SiO₄ crystal inside it.

18. A laser according to any preceding claim in which the cavity comprises two concave mirrors 0.3 meter in radius separated by 20cm.

19. A laser according to claim 18 in which the concave mirrors are coated for high reflectivity in the 1150-1350 nm range and high transmission at the pump wavelength.

20. A laser according to claim 19 in which the cavity is constructed for pump wavelength at 532 nm for second harmonic of a YAG laser.

21. A laser according to claim 19 in which the cavity is constructed for pump wavelengths of 488 and 514.5 nm for an argon-ion laser.

22. A laser according to claim 19 and wherein the cavity is constructed for a pump wavelength at 353 nm for a nitrogen laser.

23. A laser according to any preceding claim in which the laser crystal has an antireflection coating for the wavelength range 1150-1350 nm.

24. A laser emitting coherent radiation over a band between 1150 and 1350 nm and comprising folded astigmatism corrected cavity with three mirrors in which one mirror is flat with reflectivity from 95-99% in the range 1150-1350 nm, a Cr³⁺:Mg₂SiO₄ crystal placed at the radius of curvature of another mirror and a collimating mirror placed at its focal distance away from the crystal, the reflectivity of the latter two mirrors being 99.9% in the range of 1150-1350 nm.

25. A laser according to any preceding claim the cavity of which includes a birefringent filter or etalon as tuner.

## Patentansprüche

1. Laser, enthaltend:
a) ein Lasermedium mit einem Forsterit-Einkristall, der mit dreiwertigen Chrom-Ionen (Cr³⁺:Mg₂SiO₄) dotiert ist;
b) optische Mittel zur Anregung des Lasermediums, um kohärente optische Strahlung auszusenden; und
c) einen optischen Hohlraumresonator zur Aufrechterhaltung kohärenter, vom Lasermedium ausgesandter Strahlung in einem Band zwischen 1150 und 1350 nm.

2. Laser nach Anspruch 1, bei dem die Konzentration der Chrom-Ionen-Dotierung im Bereich von etwa 0,01 bis 0,5 Atomprozent liegt.

3. Laser nach Anspruch 1 oder 2, bei dem der Einkristall des Lasermediums kristallographisch längs seiner b-Achse orientiert ist.

4. Laser nach einem der vorhergehenden Ansprüche mit Modenkopplungsmitteln für den Laser.

5. Laser nach einem der vorhergehenden Ansprüche, bei dem die Modenkopplungsmittel im optischen Hohlraumresonator angeordnet sind.

6. Laser nach Anspruch 4 oder 5, bei dem die Modenkopplungsmittel einen sättigbaren Absorber enthalten.

7. Laser nach Anspruch 6, bei dem der sättigbare Absorber ein Cyaninfarbstoff ist.

8. Laser nach einem der vorhergehenden Ansprüche, der weiterhin eine Abstimmeinrichtung zum Abstimmen der vom Lasermedium abgestrahlten kohärenten Strahlung enthält.

9. Laser nach Anspruch 8, bei dem die Abstimmeinrichtung ein innerhalb des optischen Hohlraumresonators angeordnetes Brewster-Prisma ist.

10. Laser nach einem der vorhergehenden Ansprüche, bei dem das Lasermedium einen langgestreckten Stab aus Cr³⁺:Mg₂SiO₄ enthält, der optische Hohlraumresonator ein Paar von Spiegeln aufweist, von denen der eine für 100 % Reflexionsvermögen im Bereich von etwa 1150 nm bis 1350 nm und von denen der andere für etwa 50 bis 80 % Reflexionsvermögen im Bereich von etwa 1150 nm bis 1350 nm ausgebildet ist, und das Anregungsmittel eine Blitzlampe ist.

11. Laser nach Anspruch 10, bei dem die Enden des Stabes unter dem Brewsterschen Winkel geschnitten sind.

12. Laser nach Anspruch 10 oder 11, bei dem der optische Hohlraumresonator eine Anzahl Spiegel enthält, die zusammen mit einem Etalon zur Abstimmung in einer ringförmigen Gestaltung angeordnet sind.

13. Laser nach einem der Ansprüche 1 bis 9, bei dem das Lasermedium die Form einer dünnen Scheibe oder eines Plättchens hat, der optische Hohlraumresonator eine Anzahl von Spiegeln in einer ringförmigen Anordnung aufweist, das Anregungsmittel ein Pumplaser ist und der Laser innerhalb des Hohlraums Modenkopplungsmittel sowie eine Abstimmeinrichtung enthält, wobei die Scheibe unter dem Brewsterschen Winkel geschnitten ist.

14. Laser nach einem der vorhergehenden Ansprüche, der weiterhin eine innerhalb des optischen Hohlraumresonators angeordnete Lochplatte aufweist.

15. Laser nach einem der vorhergehenden Ansprüche, der weiterhin einen akustooptischen Modulator oder sättigbaren Absorber für Güteschaltungs-(Q-Switch-)Betrieb zur Erzeugung von Nanosekunden-Impulsen hoher Leistung enthält.

16. Laser nach einem der vorhergehenden Ansprüche, bei dem die Anregungsmittel für das Medium ein gepulster Nd:YAG-Laser, ein gepulster Stickstoff-Laser, ein Farbstoff-Laser, ein kontinuierlicher (CW-)Argonionen-Laser, ein Kryptonionen-Laser oder eine Blitzlampe sind.

17. Laser nach einem der vorhergehenden Ansprüche, bei dem der Hohlraum dem Stabilitätsdiagramm mit einem Cr³⁺:Mg₂SiO₄-Kristall in ihm genügt.

18. Laser nach einem der vorhergehenden Ansprüche, bei dem der Hohlraum zwei um 20 cm voneinander beabstandete Konkavspiegel mit einem Radius von 0,3 m aufweist.

19. Laser nach Anspruch 18, bei dem die Konkavspiegel so beschichtet sind, daß sie im Bereich 1150 - 1350 nm ein hohes Reflexionsvermögen und für die Pumpwellenlänge eine hohe Durchlässigkeit aufweisen.

20. Laser nach Anspruch 19, bei dem der Hohlraum für eine Pumpwellenlänge bei 532 nm für die zweite Harmonische eines YAG-Lasers ausgebildet ist.

21. Laser nach Anspruch 19, bei dem der Hohlraum für Pumpwellenlängen von 488 und 514,5 nm für einen Argonionen-Laser ausgebildet ist.

22. Laser nach Anspruch 19, bei dem der Hohlraum für eine Pumpwellenlänge bei 353 nm für einen Stickstoff-Laser ausgebildet ist.

23. Laser nach einem der vorhergehenden Ansprüche, bei dem der Laserkristall eine Antireflexionsschicht für den Wellenlängenbereich von 1150 - 1350 nm aufweist.

24. Laser, der eine kohärente Strahlung über ein Band zwischen 1150 und 1350 nm aussendet, enthaltend einen gefalteten, astigmatisch korrigierten Hohlraum mit drei Spiegeln, wobei ein Spiegel bei einem Reflexionsvermögen von 95 - 99 % im Bereich 1150 - 1350 nm eben ist, ein Cr³⁺:Mg₂SiO₄-Kristall beim Krümmungsradius eines anderen Spiegels angeordnet ist und ein Kollimatorspiegel um seine Brennweite vom Kristall entfernt angeordnet ist, und wobei das Reflexionsvermögen der beiden letztgenannten Spiegel 99,9 % im Bereich 1150 - 1350 nm beträgt.

25. Laser nach einem der vorgenannten Ansprüche, dessen Hohlraum ein doppelbrechendes Filter oder ein Etalon als Abstimmeinrichtung enthält.

## Revendications

1. Un laser comprenant:
a. un milieu laser comprenant un monocristal de forstérite dopé à l'aide d'ions chromes trivalents (Cr³⁺:Mg₂SiO₄);
b. un moyen optique d'excitation dudit milieu laser afin d'émettre un rayonnement optique cohérent; et
c. une cavité optique résonante pour supporter un rayonnement cohérent émis par le milieu laser dans une bande comprise entre 1150 et 1350 nm.

2. Un laser selon la revendication 1 dans lequel la concentration de dopage en ions chrome est dans la plage de 0,01 à 0,5 atome pour-cent.

3. Un laser selon la revendication 1 ou 2, dans lequel le monocristal du milieu laser est orienté cristallographiquement selon son axe b.

4. Un laser selon une revendication précédente quelconque incluant un moyen de verrouillage de phase pour verrouiller le laser en phase.

5. Un laser selon une revendication précédente quelconque dans lequel le moyen de verrouillage de phase est disposé à l'intérieur de la cavité optique résonante.

6. Un laser selon la revendication 4 ou 5 dans lequel le moyen de verrouillage de phase comprend un absorbeur saturable.

7. Un laser selon la revendication 6 dans lequel l'absorbeur saturable est un colorant à la cyanine.

8. Un laser selon une revendication précédente quelconque comprenant en outre un dispositif d'accord pour accorder le rayonnement cohérent émis par le milieu laser.

9. Un laser selon la revendication 8 dans lequel le dispositif d'accord est un prisme de Brewster situé à l'intérieur de la cavité optique résonante.

10. Un laser selon une revendication précédente quelconque dans lequel le milieu laser comprend une tige allongée de Cr³⁺:Mg₂SiO₄; la cavité optique résonante comprend une paire de miroirs, l'un des miroirs étant prévu pour une réflectivité de 100% dans la plage d'environ 1150 à 1350 nm et l'autre miroir étant prévu pour une réflectivité d'environ 50% à 80% dans la plage d'environ 1150 nm à 1350 nm; et le moyen excitateur est une lampe éclair.

11. Le laser selon la revendication 10 dans lequel les extrémités de la tige sont coupées selon un angle de Brewster.

12. Un laser selon la revendication 10 ou 11 dans lequel la cavité optique résonante comprend une série de miroirs disposés selon un type annulaire de configuration à étalon de mesure.

13. Un laser selon l'une quelconque des revendications 1 à 9, dans lequel le milieu laser prend la forme d'un mince disque ou plaquette, la cavité optique résonante comprend une série de miroirs agencés en une configuration annulaire, le moyen excitateur est un laser de pompage et le laser inclut à l'intérieur de la cavité un moyen de verrouillage de phase et un moyen d'accord, le disque étant coupé selon un angle de Brewster.

14. Un laser selon une revendication précédente quelconque incluant en outre un diaphragme situé à l'intérieur de la cavité optique résonante.

15. Un laser selon une revendication précédente quelconque incluant en outre un modulateur acousto-optique ou un absorbeur saturable afin de fonctionner en laser déclenché de manière à produire des impulsions de nanosecondes à haute puissance.

16. Un laser selon une revendication précédente quelconque dans lequel le moyen d'excitation de milieu est un laser pulsé Nd:YAG, un laser pulsé à l'azote, un laser à colorants, un laser à ions argon à onde, un laser à ions krypton ou une lampe éclair.

17. Un laser selon une revendication précédente quelconque dans lequel la qualité correspond au diagramme de stabilité lorsqu'un cristal de Cr³⁺: Mg₂SiO₄ est à l'intérieur.

18. Un laser selon une revendication précédente quelconque dans lequel la cavité comprend deux miroirs concaves d'un rayon de 0,3 mètre séparés par 20 cm.

19. Un laser selon la revendication 18 dans lequel les miroirs concaves sont revêtus en vue d'une réflectivité élevée dans la plage de 1150 à 1350 nm et d'une transmission élevée à longueur d'onde de pompe.

20. Un laser selon la revendication 19, dans lequel la cavité est réalisée pour une longueur d'onde de pompe de 532 nm pour un deuxième harmonique d'un laser YAG.

21. Un laser selon la revendication 19 dans lequel la cavité est prévue pour des longueurs d'ondes de pompe de 488 et 514,5 nm pour un laser à ions argon.

22. Un laser selon la revendication 19 dans lequel la cavité est réalisée pour une longueur d'onde de pompe de 353 nm pour un laser à l'azote.

23. Un laser selon une revendication précédente quelconque dans lequel le cristal à laser est pourvu d'un revêtement anti-réflexion pour la plage des longueurs d'ondes de 1150 à 1350 nm.

24. Un laser émettant un rayonnement cohérent dans une bande comprise entre 1150 et 1350 nm et comprenant une cavité repliée corrigée quant à l'astigmatisme comprenant trois miroirs dans lequel un miroir est plat, sa réflectivité étant comprise entre 95 et 99% dans la plage de 1150 à 1350 nm, un cristal Cr³⁺:Mg₂SiO₄ placé au rayon de courbure d'un autre miroir et un miroir collimateur dont la distance au cristal est égale à sa distance focale, la réflectivité des deux derniers miroirs étant de 99,9% dans la plage de 1150 à 1350 nm.

25. Un laser selon une revendication précédente quelconque, dont la cavité inclut comme dispositif d'accord un filtre biréfringent ou un étalon.
